# EUROPÄISCHE PATENTSCHRIFT

(11) **EP 2 900 038 B1**
(45) Veröffentlichungstag und Bekanntmachung des Hinweises auf die Patenterteilung: **04.01.2017**
(21) Anmeldenummer: 14152703.6
(22) Anmeldetag: 27.01.2014
(51) Int. Cl.: H05B 33/08, B60Q 1/00

(54) **Leuchtmittel und hiermit ausgestattete Kraftfahrzeugleuchte**
Luminaire and motor vehicle light equipped with the same
Agent lumineux et lampe de véhicule automobile équipée de celui-ci

(43) Veröffentlichungstag der Anmeldung: 29.07.2015
(73) Patentinhaber: odelo GmbH, 70329 Stuttgart (DE)
(72) Erfinder: Schwegler, Veit, 70372 Stuttgart (DE); Vollmer, Marco, 71332 Waiblingen (DE)
(74) Vertreter: Benninger, Johannes

(56) Entgegenhaltungen:
- US-A1- 2010 007 283
- US-A1- 2011 068 701
- US-A1- 2012 306 373

## Beschreibung

Die Erfindung betrifft ein Leuchtmittel mit mindestens zwei OLEDs als Lichtquelle gemäß dem Oberbegriff des Anspruchs 1 und eine mit mindestens einem derartigen Leuchtmittel ausgestattete Kraftfahrzeugleuchte gemäß dem Oberbegriff des Anspruchs 11 sowie ein Verfahren zum Betrieb mindestens eines derartigen Leuchtmittels und/oder einer mit wenigstens einem solchen Leuchtmittel ausgestatteten Kraftfahrzeugleuchte gemäß dem Oberbegriff des Anspruchs 14.

Eine typische Kraftfahrzeugleuchte umfasst einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Kraftfahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Kraftfahrzeugleuchten Glühlampen, Gasentladungslampen sowie unter anderem wegen ihres geringen Stromverbrauchs und geringen Bauraumbedarfs vermehrt Leuchtdioden zum Einsatz. Letztere bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

In Verbindung mit der Verwendung von LEDs als Lichtquellen in einer Kraftfahrzeugleuchte ist bekannt, mehrere LEDs von außerhalb des Leuchteninnenraums durch die Lichtscheibe hindurch sichtbar auf einer Fläche anzuordnen, welche bei eingeschalteten LEDs durch die Lichtscheibe hindurch als leuchtende Fläche wahrgenommen wird, oder die LEDs in einem von außerhalb des Leuchteninnenraums durch die Lichtscheibe hindurch nicht einsehbaren Bereich anzuordnen, wobei das von den LEDs abgestrahlte Licht über einen Reflektor und/oder einen Lichtleiter in Richtung der Lichtscheibe verteilt und umgelenkt wird, welcher Reflektor und/oder welcher Lichtleiter dann von außerhalb des Leuchteninnenraums durch die Lichtscheibe hindurch gesehen als leuchtende Fläche wahrgenommen wird, von welcher aus das Licht schließlich durch die Lichtscheibe hindurch aus dem Leuchteninnenraum austreten kann.

Nachteilig an beiden Varianten ist neben dem immer noch teils erheblichen Bauraumbedarf im Leuchteninnenraum der notwendige, nicht unerhebliche Aufwand, um ein homogenes Erscheinungsbild der leuchtenden Fläche zu erhalten.

Eine Behebung dieser Nachteile verspricht die Verwendung organischer Leuchtdioden (Organic Light Emitting Diode; OLED) als Lichtquellen.

Eine OLED ist ein leuchtendes Dünnschichtbauelement aus organischen halbleitenden Materialien mit mindestens einer Emitterschicht, das sich von den anorganischen Leuchtdioden (LED) dadurch unterscheidet, dass keine einkristallinen Materialien erforderlich sind. Im Vergleich zu anorganischen LEDs lassen sich organische Leuchtdioden daher in kostengünstiger Dünnschichttechnik herstellen. OLEDs ermöglichen dadurch die Herstellung flächiger Lichtquellen, die einerseits sehr dünn und andererseits als durch die Lichtscheibe einer Kraftfahrzeugleuchte hindurch sichtbare leuchtende Fläche eingesetzt einen besonders homogenes Erscheinungsbild aufweisen.

Durch EP 2 592 331 A1 ist eine Kraftfahrzeugleuchte mit einer vermittels eines Halters im Leuchteninnenraum untergebrachten OLED bekannt. Der Halter ist dabei als ein die OLED zumindest bereichsweise umgebender Rahmen ausgeführt. Zum Schutz ihrer Glasplättchen vor Zerstörung durch Vibrationen kann dabei vorgesehen sein, zwischen dem Halter und der OLED ein Elastomer anzuordnen.

Durch DE 10 2009 009 087 A1 ist bekannt, im Leuchteninnenraum einer Kraftfahrzeugleuchte eine OLED als Lichtquelle eines zur Erfüllung einer zweiten Lichtfunktion vorgesehenen Leuchtmittels im Strahlengang zwischen einem zur Erfüllung einer ersten Lichtfunktion vorgesehenen Leuchtmittels und einer Lichtscheibe anzuordnen. Die OLED ist dabei zwischen zwei Klammern einer Halterung gespannt.

Durch DE 20 207 799 U1 ist eine Kraftfahrzeugleuchte mit einer auf einem Träger aufsitzenden Lichtscheibe und einer zwischen Lichtscheibe und dem Träger angeordneten OLED bekannt.

Durch DE 10 2007 021 179 A1 ist bekannt, eine OLED in eine transparente, einen Leuchteninnenraum begrenzende Rückwand einer Kraftfahrzeugleuchte zu integrieren.

Durch DE 10 2005 024 838 A1 ist ein für den Innen- oder Außenbereich eines Fahrzeugs vorgesehenes Leuchtmittel mit einer OLED als Lichtquelle bekannt. Das Leuchtmittel umfasst eine auf einem Träger angeordnete OLED. Die OLED ist beispielsweise durch Aufkleben mit einem flächigen Träger verbunden. Der beispielsweise im Spritzguss hergestellte Träger weist ein Anschlussmittel auf, mit dem das Leuchtmittel mit dem Kraftfahrzeug elektrisch und mechanisch verbindbar ist. Das Anschlussmittel in Form eines Zapfens mit Rastmitteln ist mittig auf der Rückseite des Trägers angeordnet.

Durch US 2011/089811 A1 ist ein Leuchtmittel mit einer OLED als Lichtquelle bekannt. Die OLED ist auf einem gekrümmten Träger angeordnet. Der Träger wird mit der Krümmung hergestellt. Die ebene OLED wird auf den Träger aufgebracht, indem dieser elastisch in ebene Form gebracht wird. Nach dem Aufbringen der OLED wird die elastische Verformung des Trägers aufgehoben, so dass der OLED die Krümmung des Trägers aufgezwungen wird.

Durch EP 2 474 448 A1 ist ein Innenrückblickspiegel mit einer OLED als Blendschutz bekannt. Das gesamte Spiegelglas des Innenrückblickspiegels ist hierbei mit der OLED versehen. Ein Umgebungslichtsensor erfasst die Scheinwerfer anderer Fahrzeuge und dimmt deren Blendwirkung durch Betrieb der OLED.

Durch US 2011/0068701 A1 ist eine Farbsteuerung eines Leuchtmittels mit mehreren in Serie geschalteten OLEDs bekannt. Die Farbsteuerung erfolgt anhand einer Stromregelung durch wenigstens eine der in Serie verschalteten OLEDs. Eine Abdimmung mit sinkender Temperatur kann durch im Bypass angeordnete Widerstände mit positivem Temperaturkoeffizienten erfolgen. Diese weisen jedoch zumindest innerhalb eines Anwendungsbereichs immer einen verbleibenden Restwiderstand auf, so dass keine vollständige Trennung der parallel zum Bypass angeordneten OLED von der Stromversorgung erfolgt. Eine Abschaltung liegt theoretisch nur bei Supraleitung im Bypass vor. Ferner ist eine PWM-Steuerung vorgesehen, die einen Temperaturfühler umfasst.

Um OLEDs als Lichtquellen von für den Einsatz in Kraftfahrzeugleuchten vorgesehenen Leuchtmitteln verwenden zu können, müssen beispielsweise durch technische Anforderungen vorgegebene Umgebungsbedingungen beherrscht werden, wie sie beim Einsatz in Kraftfahrzeugleuchten auftreten. Hierbei handelt es sich vor allem um technische Anforderungen hinsichtlich mechanischer und thermischer Stabilität, wie sie im Automobilbereich beispielsweise durch den Standard LV 124 vorgegeben werden.

Eine typische technische Anforderung hieraus bezüglich thermischer Stabilität betrifft den sowohl im Warmzustand bei eingeschaltetem Leuchtmittel, als auch im Kaltzustand bei ausgeschaltetem Leuchtmittel, sowie bei der Inbetriebnahme aus dem Kaltzustand zu ertragenden Temperaturbereich, innerhalb welchen Temperaturbereichs sämtliche zur Erfüllung einer Lichtfunktion in einer Kraftfahrzeugleuchte verbauten Leuchtmittel die Lichtverteilungen der durch sie zu bewältigenden Lichtfunktionen jeweils vollständig erfüllen leisten müssen. Die diesbezügliche technische Anforderung sieht im Kraftfahrzeug- bzw. Automobilbereich einen Temperaturbereich von beispielsweise -40°C bis 80°C vor. Darüber hinaus gibt es auch technische Anforderungen für Temperaturbereiche mit höheren und/oder niedrigeren Temperaturgrenzen.

Dennoch sind höhere oder tiefere Temperaturen als in den genannten Anforderungen in der Realität nicht auszuschließen und möglich. Beispielsweise bei Sonneneinstrahlung in heißen Wüstengebieten können in einer Leuchte oder an Leuchtenteilen auch Temperaturen von über 80°C auftreten, ebenso wie in arktischen Regionen beispielsweise bei klarem Nachthimmel Temperaturen von unter minus 40°C auftreten können.

Bei der Verwendung von OLEDs ergibt sich hierbei die spezielle Problemstellung, dass sich bei gleichbleibendem, an die OLED angelegtem Strom die Spannung über einen großen Bereich mit der Temperatur ändert. Speziell im Bereich unter etwa 0 °C steigt die Spannung bei konstanter Stromstärke sehr stark an. Dies unterscheidet sie - elektrisch gesehen - stark von LEDs. Hierdurch wird die elektrische Ansteuerung der OLED mittels Schaltungen schwierig oder mit der bislang für LEDs eingesetzten Schaltungstechnik zumindest für den Automobilbereich mit seinen begrenzten Bordnetzspannungen äußerst aufwändig oder gar unmöglich.

Darüber hinaus nimmt auch bei OLEDs genauso wie bei LEDs deren Wirkungsgrad mit sinkender Temperatur zu. In Verbindung mit stark steigender Spannung unter etwa 0 °C steigt damit die Leuchtstärke von OLEDs überproportional an, wodurch mit OLEDs als Lichtquellen ausgestattete Leuchtmittel zur Erfüllung einer Lichtfunktion in einer Kraftfahrzeugleuchte innerhalb eines Temperaturbereichs unter etwa 0 °C die ihnen zugeteilten Lichtverteilungen nicht mehr zu erfüllen in der Lage sind, weil sie zu viel Licht auch in Bereiche abstrahlen, die beispielsweise dunkel bleiben müssen.

Die voranstehenden Ausführungen zur Erfüllung von Lichtverteilungen von Lichtfunktionen zumindest im durch die technischen Anforderungen an Kraftfahrzeugleuchten vorgegebenen Temperaturbereich bei der Verwendung von OLEDs als Lichtquellen von Leuchtmitteln in Kraftfahrzeugleuchten finden beim Stand der Technik ungeachtet der damit verfolgten hehren Ziele bislang keinerlei Beachtung.

Eine Aufgabe der Erfindung ist es, ein beispielsweise mit einem Träger ausgestattetes Leuchtmittel mit beispielsweise von einem gegebenenfalls vorgesehenen Träger gehaltenen OLEDs sowie eine mit mindestens einem solchen Leuchtmittel ausgestattete Kraftfahrzeugleuchte und ein Verfahren zum Betrieb zumindest eines Leuchtmittels mit mindestens zwei OLEDs als Lichtquellen oder einer mit wenigstens einem entsprechenden Leuchtmittel ausgestatteten Kraftfahrzeugleuchte zu entwickeln, welche die Nachteile des Standes der Technik beseitigen und die Verwendung von OLEDs zumindest im durch die technischen Anforderungen an Kraftfahrzeugleuchten vorgegebenen Temperaturbereich gestatten.

Die Aufgabe wird jeweils gelöst mit den Merkmalen der unabhängigen Ansprüche.

Ein erster Gegenstand der Erfindung betrifft demnach ein Leuchtmittel umfassend mindestens zwei OLEDs als Lichtquellen. Das Leuchtmittel umfasst eine Schaltungsanordnung zur Stromversorgung der OLEDs bei Betrieb des Leuchtmittels. Die Schaltungsanordnung umfasst mindestens einen zumindest in wärmeleitendem Kontakt mit zumindest einer OLED stehenden Temperaturfühler beispielsweise in Form eines Temperatursensors. Der Temperaturfühler weist ein einer von ihm erfassten Temperatur, beispielsweise einer Umgebungstemperatur mindestens einer OLED des Leuchtmittels oder der Temperatur mindestens einer OLED des Leuchtmittels proportionales Ausgangssignal auf. Die Schaltungsanordnung umfasst darüber hinaus einen mit dem Temperaturfühler elektrisch verbundenen Schaltkreis, der vom Ausgangssignal des Temperatursensors gesteuert wird. Der Schaltkreis ist mit der Schaltungsanordnung verbunden und steuert die Stromzufuhr wenigstens einer der OLEDs in Abhängigkeit von der vom Temperaturfühler erfassten Temperatur. Durch die Einflussnahme auf die Stromzufuhr wenigstens einer der OLEDs in Abhängigkeit von der vom Temperaturfühler erfassten Temperatur, nimmt der Schaltkreis - und damit die Schaltungsanordnung - Einfluss auf die Temperatur mindestens einer OLED des Leuchtmittels. Die Schaltungsanordnung weist wenigstens zwei elektrische Anschlüsse für jeweils mindestens eine OLED auf. Mehrere an einen elektrischen Anschluss angeschlossene OLEDs können dabei parallel und/oder in Serie geschaltet sein.

Bei einem Ausgangssignal proportional einer vom Temperaturfühler erfassten Temperatur, die niedriger ist, als eine vorgegebene Schwellentemperatur, steuert das Ausgangssignal des Temperaturfühlers den Schaltkreis derart, dass die Schaltungsanordnung bei eingeschaltetem Leuchtmittel bzw. bei Betrieb des Leuchtmittels wenigstens einen elektrischen Anschluss von der Stromversorgung trennt, beispielsweise indem sie wenigstens einen elektrischen Anschluss überbrückt, und dadurch die mindestens eine an wenigstens einen elektrischen Anschluss angeschlossene OLED ausgeschaltet ist oder bleibt, wobei zumindest ein verbleibender elektrischer Anschluss weiterhin mit der Stromversorgung verbunden ist oder bleibt und somit betrieben wird und dadurch die mindestens eine an den zumindest einen verbleibenden elektrischen Anschluss angeschlossene OLED eingeschaltet ist, bleibt oder wird.

Bei einem Ausgangssignal proportional einer vom Temperaturfühler erfassten Temperatur, die höher ist, als eine vorgegebene Schwellentemperatur, steuert das Ausgangssignal des Temperaturfühlers den Schaltkreis derart, dass die Schaltungsanordnung bei eingeschaltetem Leuchtmittel bzw. bei Betrieb des Leuchtmittels sämtliche elektrischen Anschlüsse mit der Stromversorgung verbindet und betreibt und dadurch alle an die mindestens zwei elektrischen Anschlüsse angeschlossenen OLEDs mit Strom versorgt.

Denkbar sind weitere Schwellentemperaturen, unter oder oberhalb denen beispielsweise Maßnahmen gegen Überhitzung und/oder gestufte Abschaltungen von weiterer oder weniger elektrischer Anschlüsse stattfinden.

Dabei können mehrere Schwellentemperaturen in Anhängigkeit von der Anzahl der vorhandenen, für jeweils mindestens eine OLED vorgesehenen elektrischen Anschlüsse des Leuchtmittels vorgegeben sein, wobei bei einer niedrigsten Schwellentemperatur genau ein elektrischer Anschluss betrieben sein kann und bei einer höchsten Schwellentemperatur alle elektrischen Anschlüsse betrieben sein können.

Wenigstens zwei der elektrischen Anschlüsse für jeweils mindestens eine OLED können in Serie und/oder parallel zueinander angeordnet sein.

Es ist ersichtlich, dass die Erfindung verwirklicht sein kann durch ein Leuchtmittel mit mindestens zwei OLEDs als Lichtquellen umfassend eine Schaltungsanordnung zum Betrieb mehrerer OLEDs, welche Schaltungsanordnung mindestens einen zumindest in wärmeleitendem Kontakt mit zumindest einer OLED stehenden Temperaturfühler, der ein einer von ihm erfassten Temperatur proportionales Ausgangssignal aufweist, zur Erfassung wenigstens einer Temperatur, beispielsweise einer Umgebungstemperatur mindestens einer OLED des Leuchtmittels oder der Temperatur mindestens einer OLED des Leuchtmittels, und mindestens zwei getrennte elektrische Anschlüsse für jeweils mindestens eine OLED aufweist. Mehrere an einen elektrischen Anschluss angeschlossene OLEDs können dabei parallel und/oder in Serie geschaltet sein. Die Schaltungsanordnung umfasst darüber hinaus Schaltungsmittel mit einem mit dem Temperaturfühler elektrisch verbundenen Schaltkreis, der vom Ausgangssignal des Temperatursensors gesteuert wird. Die Schaltungsmittel können zusätzlich zu dem Schaltkreis einen oder mehrere Teile der Schaltungsanordnung umfassen. Mit den Schaltungsmitteln sind bei einer von dem Temperaturfühler erfassten Temperatur oberhalb einer ersten vorgegebenen Schwellentemperatur die elektrischen Anschlüsse paarweise oder in Gruppen zu drei, vier oder mehr Anschlüssen in Serie geschaltet. Die Schaltungsanordnung kann bei einer von dem Temperaturfühler erfassten Temperatur oberhalb der wenigstens ersten Schwellentemperatur mehrere Paare und/oder Gruppen von in Serie geschalteten elektrischen Anschlüssen aufweisen, wobei mehrere Paare und/oder Gruppen von in Serie geschalteten elektrischen Anschlüssen elektrisch parallel geschaltet sein können. Die Schaltungsmittel sehen außerdem vor, dass bei einer von dem Temperaturfühler erfassten Temperatur unterhalb der ersten vorgegebenen Schwellentemperatur je zu einem Paar oder einer Gruppe verschalteter elektrischer Anschlüsse mindestens ein elektrischer Anschluss überbrückt und dadurch aus der Serienschaltung der elektrischen Anschlüsse des jeweiligen Paars oder der jeweiligen Gruppe entfernt wird. Hierdurch liegt an dem mindestens einen verbleibenden elektrischen Anschluss eines Paars oder einer Gruppe von elektrischen Anschlüssen eine höhere Spannung an, wodurch die mindestens eine an den wenigstens einen verbleibenden Anschluss je Paar oder Gruppe angeschlossene OLED entsprechend ihres Spannungsbedarfs zur Aufrechterhaltung eines vorgegebenen Stroms mit einer höheren Spannung betrieben wird.

Zumindest ein Temperaturfühler kann unmittelbar auf einer OLED, beispielsweise auf einem vorder- oder rückseitigen Glas- oder Kunststoffplättchen einer als Lichtquelle des Leuchtmittels vorgesehenen OLED angeordnet sein.

Der Temperaturfühler kann im einfachsten Fall zumindest mit einer als Schalter ausgebildeten Partie des Schaltkreises verbunden sein, welcher bei einem einer von dem Temperaturfühler erfassten Temperatur, die kleiner ist, als eine vorgegebene Schwellentemperatur von beispielsweise 0°C proportionalen Ausgangssignal von dem Temperatursensor derart geschaltet wird, dass bis auf wenigstens eine verbleibende OLED des Leuchtmittels mindestens eine OLED oder mehrere OLEDs des Leuchtmittels, beispielsweise die Hälfte aller OLEDs des Leuchtmittels, bei Betrieb des Leuchtmittels von der Stromversorgung durch die Schaltungsanordnung getrennt ist und dadurch nicht betrieben wird, und welcher bei einem einer von dem Temperaturfühler erfassten Temperatur, die größer ist, als eine vorgegebene Schwellentemperatur von beispielsweise 0°C proportionalen Ausgangssignal von dem Temperaturfühler derart geschaltet wird, dass vorzugsweise alle OLEDs des Leuchtmittels bei dessen Betrieb mit der Stromversorgung durch die Schaltungsanordnung verbunden sind und dadurch betrieben werden.

Alternativ oder zusätzlich kann der Schaltkreis einen Proportionalregler umfassen, der in Abhängigkeit von der vom Temperaturfühler erfassten Temperatur unterhalb einer vorgegebenen Schwellentemperatur bis auf mindestens eine verbleibende OLED des Leuchtmittels bei Betrieb des Leuchtmittels um so mehr OLEDs von der Stromversorgung durch die Schaltungsanordnung trennt, je tiefer die erfasste Temperatur unterhalb der vorgegebenen Schwellentemperatur liegt.

Der Schaltkreis kann eine Kombination aus einem Schalter und einem Proportionalregler umfassen, wobei der Schalter eine generelle Stromversorgung aller OLEDs des Leuchtmittels bei dessen Betrieb bei einem einer von dem Temperatursensor erfassten Temperatur, die größer ist, als eine vorgegebene Schwellentemperatur von beispielsweise 0°C proportionalen Ausgangssignal besorgt, und der Proportionalregler bis auf mindestens eine verbleibende OLED des Leuchtmittels um so mehr OLEDs von der Stromversorgung durch die Schaltungsanordnung trennt, je tiefer die vom Temperaturfühler erfasste Temperatur unterhalb der vorgegebenen Schwellentemperatur liegt.

Der Schaltkreis kann alternativ oder zusätzlich zu den beschriebenen Varianten ein oder mehrere Proportional- und/oder Differential- und/oder Integralglieder (P-, D-, I-Glieder) und/oder Schalter umfassen um eine gewünschte Regelcharakteristik zu erhalten.

Wichtig ist hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler und OLED entstehen können.

Vorteile gegenüber dem Stand der Technik ergeben sich unter Anderem durch eine Anpassung des Betriebs von OLEDs an einen breiten Temperaturbereich. Insbesondere bei Umgebungstemperaturen von unter 0°C kann dadurch der unvorteilhafte Strom-Spannungs-Verlauf von OLEDs zumindest in diskreten Stufen angepasst werden, wodurch diese im Kraftfahrzeugbereich einsetzbar werden.

Die Erfindung stellt damit eine Möglichkeit dar, OLEDs in Leuchten in einem großen Temperaturbereich zu betreiben. OLEDs werden, wie auch LEDs, stromgetrieben. Eine einfache Spannungserhöhung ohne aufwändige Spannungsumwandlung, wozu die im Kraftfahrzeug vorherrschende Gleichspannung in Wechselspannung und wieder zurück umgewandelt werden muss, ist nicht möglich, da der zur Verfügung stehende Spannungsbereich im Kraftfahrzeug nicht dafür ausreicht mehrere beispielsweise in Serie geschaltete OLEDs zu betreiben.

OLEDs weisen als stromgetriebene Lichtquellen unterhalb von Betriebstemperaturen von etwa 25°C einen großen Spannungsanstieg bei gleichzeitig konstanter Stromstärke und bei sinkender Temperatur auf. Verglichen mit den I-U-Diagrammen von LEDs verhalten sie sich damit deutlich verschieden mit einer starken Verschiebung und Verlaufsänderung der Kennlinie im I-U-Diagramm unterhalb einer Temperatur von 25°C. Um diesem Effekt einer starken Verschiebung und Verlaufsänderung der Kennlinie mit der Temperatur einer OLED im Vergleich zu einer LED entgegenzuwirken wird eine Schaltungsanordnung vorgesehen, welche bei Temperaturen unterhalb einer vorgegebenen Schwellentemperatur von beispielsweise 0°C elektrische Anschlüsse der Schaltungsanordnung überbrückt und dadurch die hieran angeschlossenen OLEDs abschaltet und oberhalb einer vorgegebenen Schwellentemperatur von beispielsweise 0°C die Überbrückung elektrischer Anschlüsse der Schaltungsanordnung aufhebt und dadurch die an die zuvor überbrückten elektrischen Anschlüsse angeschlossenen OLEDs zuschaltet und beispielsweise mit an den verbleibenden elektrischen Anschlüssen angeschlossenen OLEDs in Serie schaltet. Hierdurch liegt oberhalb einer Schwellentemperatur, wenn die elektrischen Anschlüsse in Serie geschaltet sind, eine niedrigere Spannung an jedem elektrischen Anschluss an, als wenn die elektrischen Anschlüsse zum Teil überbrückt und dadurch abgeschaltet sind bzw. wenn ein Teil der elektrischen Anschlüsse überbrückt und dadurch abgeschaltet sind.

Durch die getroffenen Maßnahmen kann der höhere Spannungsbedarf von OLEDs beispielsweise unterhalb einer Schwellentemperatur von 0°C ausgeglichen werden.

Die Erfindung löst damit gleichzeitig sowohl das Problem, den Spannungsverlauf von OLEDs in den Griff zu bekommen, als auch die bei gleichbleibendem Strom mit zunehmender Spannung bei gleichzeitig abnehmender Temperatur höhere Lichtemission von OLEDs zu kompensieren.

Die Erfindung löst damit das Problem, OLEDs beispielsweise in einem Temperaturbereich von minus 40°C bis plus 80°C und damit für den Einsatz im Kraftfahrzeug- bzw. Automobilbereich vorzusehen, obgleich OLEDs im Vergleich zu konventionellen LEDs ein wesentlich anderes Temperaturverhalten aufweisen, weil deren Spannung bei gleichbleibendem Strom bei Temperaturen unter 0°C sehr stark ansteigt. Die Erfindung zeigt Maßnahmen auf, die getroffen werden können, um den Spannungsverlauf von OLEDs insbesondere im für den Einsatz im Kraftfahrzeug- bzw. Automobilbereich relevanten Temperaturbereich von -40°C bis +80°C in den Griff zu bekommen.

Zusätzliche Vorteile ergeben sich unter Anderem dadurch, dass keine aufwendigen elektrischen Schaltungen nötig sind, um den Strom über einen großen Spannungsbereich konstant zu halten. Aktuell ist dies mit z. B. DC/DC-Wandlerschaltungen (Gleichspannungswandler) möglich, die allerdings teuer sind. Auch führen die hierin verbauten Spulen zu Abstrahlung und/oder Einstrahlung von relativ starken elektromagnetischen Feldern, wodurch es jedoch zu Problemen hinsichtlich elektromagnetischer Verträglichkeit (EMV) innerhalb des Leuchtmittels und damit in einer mit einem solchen Leuchtmittel ausgestatteten Kraftfahrzeugleuchte kommen kann. Daher muss hierfür eine spezielle Abschirmung der Elektronik erfolgen einhergehend mit einem zusätzlichen Schirmungsbauteil.

Anstelle eines zusätzlichen Bauteils kann die Abschirmung der Elektronik auch durch einen Kühlkörper verwirklicht werden, der gegebenenfalls schon vorhanden ist. Hierbei wird das sich hinsichtlich EMV kritisch verhaltende Bauteil, wie etwa eine Spule, das beispielsweise an einer Platine befestigt ist, von dem beispielsweise aus Metall oder Gusseisen hergestellten Kühlkörper umgeben, beispielsweise indem die Spule in eine Kuhle des Kühlkörpers beim Befestigen eintaucht. Der Kühlkörper wird so nicht nur zur Kühlung, sondern gleichzeitig als Schirmblech verwendet.

Ein weiterer Vorteil ergibt sich dadurch, dass OLEDs hierdurch auch innerhalb eines bei Bordnetzen von Kraftfahrzeugen nicht unüblichen Spannungsbereichs von 7V bis 17V betrieben werden können, da der kritische Spannungsbereich bei Temperaturen unter 0°C vermittels der Überbrückung zumindest einzelner OLEDs umgangen werden kann.

Eine vorteilhafte Ausgestaltung ergibt sich, wenn das Leuchtmittel zusätzlich einen Träger umfasst, an dem mindestens eine als Lichtquelle des Leuchtmittels vorgesehene OLED angeordnet ist, beispielsweise indem der Träger die mindestens eine OLED des Leuchtmittels trägt oder hält.

OLEDs weisen eine Schichtstapelhöhe in der Größenordnung von etwa 100 nm auf. Die Stapel sind eingeschlossen zwischen metallischen Schichten für Anode und Kathode. Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material insbesondere mit Glas verkapselt. Zwar gibt es Anstrengungen, das Glas durch Kunststoff zu ersetzen, die jedoch zumindest noch nicht vom gewünschten Erfolg gekrönt sind, weil die Dichtigkeit der alternativen Materialien für die Verkapselung zumindest noch nicht ausreichend gut genug ist.

Die OLEDs müssen dabei möglichst frei von mechanischen Spannungen (spannungsfrei) und Momenten (momentfrei) aufgenommen werden, da die zur Verkapselung der Schichtstapel vorgesehenen Glasplättchen mit jeweils etwa 0,7 bis 1,2 mm relativ dünn und damit auch relativ zerbrechlich sind. Vor allem sind auch die Glasaußenkanten empfindlich gegen mechanische Belastungen und können leicht ausbrechen.

Teilweise sind die Gläser noch dünner, sofern keine Dünnschichtverkapselung in den Schichtstapel zugefügt wird, da dann mit einem Kavitätsglas gearbeitet wird. Dabei wird das Glas auf der Kathodenseite beispielsweise ausgefräst, um den so genannten Getter unterzubringen, dessen Aufgabe es ist, Feuchtigkeit, die beispielsweise durch Diffusion durch die Kleberschicht zwischen den zwei Glasplatten eintreten kann, im Inneren der OLED aufzunehmen und die organischen Schichten hiervor zu schützen.

Das Kavitätsglas hat damit im mittleren Bereich Dicken von etwa 0,5 mm und weniger und ist damit sehr empfindlich gegen Druckbelastungen. Auch darf durch Druckbelastung der Getter, der in entsprechend ausgeführten OLEDs mit etwas Abstand zu den organischen Schichten angeordnet ist, nicht auf die organischen Schichten drücken, da hierdurch die wenige Nanometer dicken Schichten beschädigt werden könnten, was zu einem teilweisen oder totalen Ausfall der OLED führen würde.

Um OLEDs als Lichtquellen von für den Einsatz in Kraftfahrzeugleuchten vorgesehenen Leuchtmitteln verwenden zu können, müssen diese daher möglichst spannungs- und momentfrei aufgenommen werden, da die zur Verkapselung der Schichtstapel vorgesehenen Glasplättchen relativ dünn und damit auch relativ zerbrechlich sind. Vor allem sind auch die Glasaußenkanten empfindlich gegen mechanische Belastungen und können leicht ausbrechen.

Mit der Verwendung eines Trägers, an welchem eine oder mehrere OLEDs des Leuchtmittels angeordnet und beispielsweise in einem Leuchteninnenraum gehalten sind, einhergehende Vorteile sind eine Halterung frei von mechanischen Spannungen für die entsprechenden OLEDs. Hierdurch werden Schäden vermieden, die wegen des Aufbaus von OLEDs mit eine Vorder- bzw. Rückseite der OLED bildenden Deck- und Rückflächen aus jeweils dünnen Glasplättchen beim Einsatz in Kraftfahrzeugleuchten auftreten würden, wenn OLEDs nicht frei von mechanischen Spannungen untergebracht werden können. Darüber hinaus erlaubt der Träger den Erhalt einer Kühlung bzw. Abfuhr der beim Betrieb von OLEDs entstehenden Wärme, die für den tatsächlichen Gebrauch von OLEDs, die sehr temperaturempfindlich sind, in Kraftfahrzeugleuchten vorteilhaft ist.

Die Erfindung ermöglicht dadurch, OLEDs unter den im Betrieb von Kraftfahrzeugleuchten auftretenden mechanischen und thermischen Belastungen einzusetzen und damit für den tatsächlichen Gebrauch in Kraftfahrzeugen vorzusehen.

Ein zweiter Gegenstand der Erfindung betrifft eine Kraftfahrzeugleuchte mit wenigstens einem zur Erfüllung wenigstens einer Lichtfunktion der Kraftfahrzeugleuchte vorgesehenen, zuvor beschriebenen Leuchtmittel.

Wird eine entsprechend ausgestattete Kraftfahrzeugleuchte mit einem Leuchtmittel mit zwei oder mehr OLEDs als Lichtquellen bei einer Umgebungstemperatur gleich oder unterhalb der ersten Schwellentemperatur in Betrieb genommen, so werden zunächst nur einige der OLEDs mit erhöhter Spannung betrieben. Dabei findet aufgrund des höheren Wirkungsgrads bei niedrigen Temperaturen eine Kompensation des Lichtstroms der überbrückten OLEDs statt. Haben die mit erhöhter Spannung betriebenen OLEDs den Leuchteninnenraum mit ihrer Abwärme auf eine Temperatur gleich oder oberhalb der ersten Schwellentemperatur aufgeheizt, wird dies durch den Temperaturfühler erfasst und die Schaltungsmittel schalten die verbleibenden OLEDs beispielsweise in Serie zu den bereits betriebenen OLEDs hinzu. Gleich oder oberhalb einer vorgegebenen Schwellentemperatur findet damit ein Normalbetrieb aller als Lichtquellen des Leuchtmittels dienenden OLEDs statt.

Mindestens eine OLED des Leuchtmittels kann in eine Lichtscheibe und/oder eine Rückwand und/oder in ein anderes Bauteil der Kraftfahrzeugleuchte integriert sein.

Die Kraftfahrzeugleuchte kann einen von einer Lichtscheibe und einem Leuchtengehäuse zumindest zum Teil umschlossenen Leuchteninnenraum aufweisen. Mindestens ein zuvor beschriebenes Leuchtmittel kann in dem Leuchteninnenraum beherbergt sein.

Die Kraftfahrzeugleuchte kann mehrere beim Blick von außerhalb des Leuchteninnenraums durch die Lichtscheibe hindurch gesehen räumlich neben- und/oder hintereinander angeordnete, zuvor beschriebene Leuchtmittel aufweisen.

Alternativ oder zusätzlich kann die Kraftfahrzeugleuchte mindestens ein zuvor beschriebenes Leuchtmittel aufweisen, sowie mindestens ein zusätzliches in dem Leuchteninnenraum beherbergtes und zur Erfüllung zumindest der selben oder einer weiteren Lichtfunktion der Kraftfahrzeugleuchte vorgesehenes Leuchtmittel mit wenigstens einer Lichtquelle.

Zumindest eine Lichtquelle eines zur Erfüllung zumindest der selben oder einer weiteren Lichtfunktion der Kraftfahrzeugleuchte vorgesehenen, zusätzlichen Leuchtmittels kann beim Blick von außerhalb des Leuchteninnenraums durch die Lichtscheibe hindurch gesehen hinter mindestens einer beispielsweise von einem Träger im Leuchteninnenraum gehaltenen OLED eines Leuchtmittels mit mindestens zwei OLEDs als Lichtquellen angeordnet sein, so dass wenigstens eine OLED des Leuchtmittels im direkten Strahlengang des von der zumindest einen Lichtquelle des zur Erfüllung zumindest der selben oder einer weiteren Lichtfunktion der Kraftfahrzeugleuchte vorgesehenen, zusätzlichen Leuchtmittels zur Lichtscheibe liegt.

Ein mindestens eine OLED des Leuchtmittels mit mindestens zwei OLEDs als Lichtquellen im Leuchteninnenraum haltender Träger des Leuchtmittels kann eine beispielsweise zentrale Lichtöffnung beispielsweise für von einer beim Blick durch eine Lichtscheibe einer Kraftfahrzeugleuchte hindurch gesehen hinter dem Träger angeordneten Lichtquelle eines zur Erfüllung zumindest der selben oder einer weiteren Lichtfunktion der Kraftfahrzeugleuchte vorgesehenen, zusätzlichen, beispielsweise mit einem zuvor beschriebenen Leuchtmittel identischen Leuchtmittels abgestrahltes Licht aufweisen.

Durch das Unterbringen mehrere OLEDs in einer Kraftfahrzeugleuchte kommt es zu gegenseitigen Abschattungen deren leuchtender Flächen, was zur Folge hat, das einzelne Winkelbereiche eine zu geringe Lichtstärke aufweisen in Bezug auf die beispielsweise gesetzlich geforderten, von einer Lichtverteilung vorgegebenen Lichtwerte. Durch beispielsweise zentrale Lichtöffnungen zumindest in einem oder mehreren gegebenenfalls vorgesehenen Trägern der vorderen, der Lichtscheibe näheren Leuchtmitteln mehrerer beim Blick von außerhalb des Leuchteninnenraums durch die Lichtscheibe hindurch gesehen räumlich neben- und/oder hintereinander angeordneter, zuvor beschriebener oder unterschiedlicher Leuchtmittel kann dieser gegenseitigen Abschattung zur Erhöhung der Lichtwerte in einzelnen Winkelbereichen entgegengewirkt werden.

Eine gegebenenfalls in einem Träger vorgesehene zentrale Öffnung kann zumindest zum Teil von einer OLED abgedeckt sein.

Zumindest zwei von mindestens zwei Lichtfunktionen der Kraftfahrzeugleuchte können unterschiedliche Lichtfarben aufweisen.

Die Kraftfahrzeugleuchte kann einen von einem Leuchtengehäuse und einer Lichtscheibe umschlossenen Leuchteninnenraum aufweisen, in dem mindestens eine Blende untergebracht sein kann, durch welche hindurch ein Träger eines Leuchtmittels hindurchgesteckt bzw. an welcher ein Träger eines Leuchtmittels befestigt sein kann.

Die Kraftfahrzeugleuchte ist bevorzugt als Heckleuchte ausgeführt. Alternativ kann die Kraftfahrzeugleuchte als in einem Außenrückblickspiegel untergebrachte Wiederholblinkleuchte ausgestaltet sein.

Wichtig ist hervorzuheben, dass die Kraftfahrzeugleuchte zusätzlich zu der durch die OLEDs des mit diesen als Lichtquellen ausgestatteten Leuchtmittels zu erfüllenden Lichtfunktion über mindestens eine konventionell vermittels beispielsweise eines oder mehrerer beispielsweise in einer separaten Reflektorkammer untergebrachten Leuchtmittels und/oder eines Lichtleiters verwirklichte, zusätzliche Lichtfunktion verfügen kann. Bei dieser mindestens einen zusätzlichen Lichtfunktion kann es sich beispielsweise um eine solche Lichtfunktion handeln, deren Lichtwerte und/oder deren gesetzliche Vorschriften vermittels flächiger Lichtquellen wie mehrerer OLEDs nur unter hohem Aufwand zu erfüllen sind.

Alternativ oder zusätzlich können eine oder mehrere Lichtfunktionen unabhängig von der Kraftfahrzeugleuchte untergebracht sein. Beispielsweise können eine der Erfüllung einer Nebelschlusslichtfunktion dienende Nebelschlussleuchte und/oder ein der Erfüllung einer Rückfahrlichtfunktion dienender Rückfahrscheinwerfer zusammen in einem Modul der Kraftfahrzeugleuchte örtlich ausgelagert sein, während sich in einem anderen Bereich der Kraftfahrzeugleuchte die verbleibenden Lichtfunktionen konzentrieren. Ein Grund hierfür kann beispielsweise sein, dass die Nebelschlusslichtfunktion einen Mindestabstand zum Bremslichtfunktion aufgrund gesetzlicher Vorgaben einhalten muss. Durch diese Abtrennung ist dann zusätzlich eine größere Gestaltungsfreiheit gegeben.

Die Kraftfahrzeugleuchte erlaubt die beschriebenen Vorteile des Leuchtmittels im Kraftfahrzeug- bzw. Automobilbereich zu nutzen.

Die Erfindung erlaubt die Anforderungen an thermische Stabilität beispielsweise nach dem Standard LV 124 vollständig zu erfüllen.

Ein dritter Gegenstand der Erfindung betrifft ein Verfahren zum Betrieb zumindest eines Leuchtmittels mit mindestens zwei OLEDs als Lichtquellen oder einer mit wenigstens einem entsprechenden Leuchtmittel ausgestatteten Kraftfahrzeugleuchte.

Ein entsprechendes Verfahren sieht dementsprechend vor, unterhalb mindestens einer vorgegebenen Schwellentemperatur wenigstens eine OLED eines Leuchtmittels mit mindestens zwei OLEDs als Lichtquellen beim Betrieb des Leuchtmittels abzuschalten, bis die zumindest eine verbleibende, bei Betrieb des Leuchtmittels betriebene OLED wenigstens sich selbst sowie gegebenenfalls die wenigstens eine abgeschaltete OLED auf eine Temperatur oberhalb einer vorgegebenen Schwellentemperatur erwärmt hat, ab und/oder oberhalb der alle OLEDs des Leuchtmittels (wieder) betrieben werden oder zusätzlich zu welcher zumindest einen verbleibenden, bei Betrieb des Leuchtmittels betriebenen OLED zumindest mindestens eine unterhalb einer vorgegebenen Schwellentemperatur abgeschaltete OLED (wieder) betrieben wird.

Das Verfahren kann einzelne Merkmale oder eine beliebige Kombination von zwei oder mehreren Merkmalen eines zuvor beschriebenen Leuchtmittels oder einer mit mindestens einem solchen Leuchtmittel ausgestatteten Kraftfahrzeugleuchte nebst einer oder mehrerer der beschriebenen und/oder getroffenen Maßnahmen zur Schaltung dessen als OLED ausgeführter Lichtquellen aufweisen.

Ebenso wie die Kraftfahrzeugleuchte es erlaubt, die Vorteile des Leuchtmittels zu nutzen, erlaubt auch das Verfahren, sämtliche Vorteile des Leuchtmittels nutzbar zu machen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer

### Darstellung:

- Fig. 1: ein Schaltbild eines Leuchtmittels mit mindestens zwei OLEDs als Lichtquellen und einer Schaltungsanordnung zum Betrieb der OLEDs mit mindestens einem mit wenigstens einer OLED in zumindest wärmeleitendem Kontakt stehenden Temperaturfühler gemäß eines ersten Ausführungsbeispiels in Fig. 1a) sowie ein Detail der Schaltungsanordnung des Leuchtmittels aus Fig. 1 a) unterhalb einer Schwellentemperatur in Fig. 1b) und ein Detail der Schaltungsanordnung des Leuchtmittels aus Fig. 1 a) oberhalb einer Schwellentemperatur in Fig. 1c).
- Fig. 2: ein Schaltbild eines Leuchtmittels mit mindestens zwei OLEDs als Lichtquellen und einer Schaltungsanordnung zum Betrieb der OLEDs mit mindestens einem mit wenigstens einer OLED in zumindest wärmeleitendem Kontakt stehenden Temperaturfühler gemäß eines zweiten Ausführungsbeispiels.
- Fig. 3: ein Schaltbild eines Leuchtmittels mit mindestens zwei OLEDs als Lichtquellen und einer Schaltungsanordnung zum Betrieb der OLEDs mit mindestens einem mit wenigstens einer OLED in zumindest wärmeleitendem Kontakt stehenden Temperaturfühler gemäß eines dritten Ausführungsbeispiels.
- Fig. 4: ein Schaltbild eines Leuchtmittels mit mindestens zwei OLEDs als Lichtquellen und einer Schaltungsanordnung zum Betrieb der OLEDs mit mindestens einem mit wenigstens einer OLED in zumindest wärmeleitendem Kontakt stehenden Temperaturfühler gemäß eines vierten Ausführungsbeispiels.

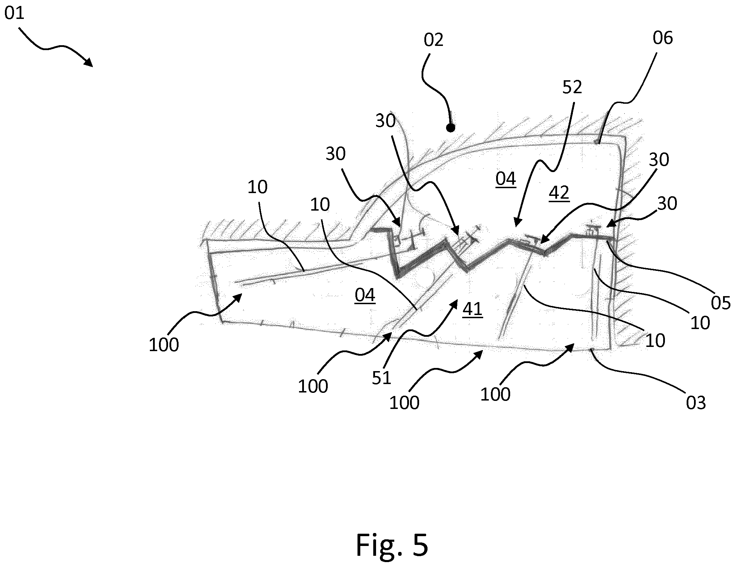

- Fig. 5: eine Kraftfahrzeugleuchte mit einem von einem Leuchtengehäuse und einer Lichtscheibe zumindest zum Teil umschlossenen Leuchteninnenraum mit einer darin beherbergten Blende, welche den Leuchteninnenraum in einen durch die Lichtscheibe hindurch gesehen vor der Blende liegenden und durch die Lichtscheibe hindurch einsehbaren, ersten Bereich und in einen durch die Lichtscheibe hindurch gesehen hinter der Blende liegenden und durch die Lichtscheibe hindurch nicht einsehbaren, zweiten Bereich einteilt, mit einer Mehrfachanordnung mehrerer Leuchtmittel mit jeweils mindestens zwei OLEDs als Lichtquellen und einer Schaltungsanordnung zum Betrieb der OLEDs mit jeweils mindestens einem mit wenigstens einer OLED jeden Leuchtmittels in zumindest wärmeleitendem Kontakt stehenden Temperaturfühler, welche jeweils mit einem mindestens eine OLED und den mit ihr in zumindest wärmeleitendem Kontakt stehenden Temperaturfühler haltenden Träger ausgestattet sind, deren Träger vom zweiten Bereich aus in den ersten Bereich hinein durch die Blende hindurchragen, in einem Querschnitt.

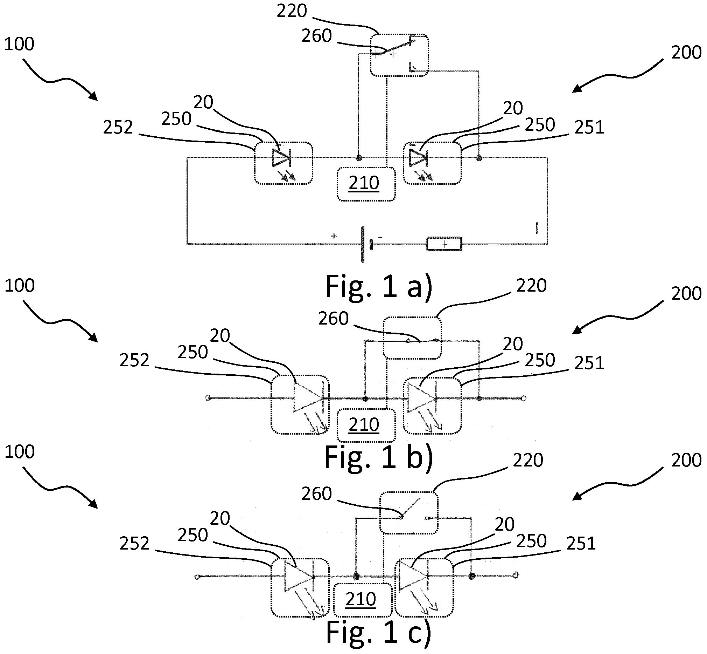

Ein in Fig. 1 bis Fig. 5 ganz oder in Teilen dargestelltes, beispielsweise zur Erfüllung mindestens einer Lichtfunktion einer beispielsweise als Heckleuchte oder als in einem Außenrückblickspiegel untergebrachte Wiederholblinkleuchte ausgeführten Kraftfahrzeugleuchte 01 vorgesehenes Leuchtmittel 100 umfasst mindestens zwei OLEDs 20 als Lichtquellen.

Das Leuchtmittel 100 zeichnet sich durch eine Schaltungsanordnung 200 zur Stromversorgung der OLEDs 20 bei Betrieb des Leuchtmittels 100 aus. Die Schaltungsanordnung 200 umfasst:
- wenigstens zwei elektrische Anschlüsse 250 für jeweils mindestens eine OLED 20,
- mindestens einen zumindest in wärmeleitendem Kontakt mit zumindest einer der OLEDs 20 stehenden Temperaturfühler 210 beispielsweise in Form eines Temperatursensors, welcher Temperaturfühler 210 ein einer von ihm erfassten Temperatur, beispielsweise einer Umgebungstemperatur mindestens einer OLED 20 des Leuchtmittels 100 oder der Temperatur mindestens einer OLED 20 des Leuchtmittels 100 proportionales Ausgangssignal aufweist,
- einen mit dem Temperaturfühler 210 elektrisch verbundenen und vom Ausgangssignal des Temperaturfühlers 210 gesteuerten Schaltkreis 220, welcher Schaltkreis 220 die Stromzufuhr wenigstens einer der OLEDs 20 bei Betrieb des Leuchtmittels 100 in Abhängigkeit von der vom Temperaturfühler 210 erfassten Temperatur steuert.

Der Schaltkreis 220 ist mit der Schaltungsanordnung 200 elektrisch verbunden und/oder Teil der Schaltungsanordnung 200 und/oder von der Schaltungsanordnung 200 umfasst und/oder umfasst zumindest zum Teil die Schaltungsanordnung 200.

Das Ausgangssignal des Temperaturfühlers 210 steuert den Schaltkreis 220 derart, dass die Schaltungsanordnung 200 bei eingeschaltetem Leuchtmittel 100 bzw. bei Betrieb des Leuchtmittels 100:
- bei einem Ausgangssignal proportional einer vom Temperaturfühler 210 erfassten Temperatur, die niedriger ist, als eine vorgegebene Schwellentemperatur von beispielsweise 0°C, wenigstens einen elektrischen Anschluss 251 von der Stromversorgung trennt und dadurch nicht mit Strom versorgt und die mindestens eine an wenigstens einen elektrischen Anschluss 251 angeschlossene OLED 20 ausgeschaltet ist oder bleibt, wobei zumindest ein verbleibender elektrischer Anschluss 252 weiterhin mit der Stromversorgung verbunden ist oder bleibt und dadurch mit Strom versorgt und betrieben wird und somit die mindestens eine an den zumindest einen verbleibenden elektrischen Anschluss 252 angeschlossene OLED 20 eingeschaltet ist, bleibt oder wird, wie in Fig. 1 b) dargestellt, und
- bei einem Ausgangssignal proportional einer vom Temperaturfühler 210 erfassten Temperatur, die höher ist, als eine vorgegebene Schwellentemperatur von beispielsweise 0°C, sämtliche elektrische Anschlüsse 250 mit der Stromversorgung verbunden sind und betrieben werden und dadurch alle an den mindestens zwei elektrischen Anschlüsse 250 angeschlossenen OLEDs 20 mit Strom versorgt werden, wie in Fig. 1 c) dargestellt.

Durch die Einflussnahme auf die Stromzufuhr wenigstens einer der OLEDs in Abhängigkeit von der vom Temperaturfühler erfassten Temperatur nimmt der Schaltkreis und damit die Schaltungsanordnung Einfluss auf die Temperatur mindestens einer OLED des Leuchtmittels und damit auf deren Wirkungsgrad, Lichtausbeute und Spannungsbedarf.

Wenigstens ein elektrischer Anschluss 250, 251 kann hierbei wie in Fig. 1 dargestellt von der Stromversorgung getrennt werden, indem der wenigstens eine elektrische Anschluss 250, 251 etwa durch Kurzschließen überbrückt wird.

An einem elektrischen Anschluss 250 können eine oder mehrere OLEDs 20 angeschlossen sein. Sind mehrere OLEDs 20 an einem elektrischen Anschluss 250 angeschlossen, so können OLEDs 20 parallel und/oder in Serie geschaltet sein.

Anstelle beispielsweise nur einer Schwellentemperatur, oberhalb derer alle OLEDs 20 des Leuchtmittels 100 betrieben werden und unterhalb derer nur ein Teil der OLEDs 20 des Leuchtmittels 100 betrieben werden, können mehrere vorgegebene Schwellentemperaturen vorgesehen sein, beispielsweise in Anhängigkeit von der Anzahl der vorhandenen, für jeweils mindestens eine OLED 20 vorgesehenen elektrischen Anschlüsse 250 des Leuchtmittels 100. Bei einer niedrigsten Schwellentemperatur ist dabei beispielsweise genau ein elektrischer Anschluss 250 mit der Stromversorgung verbunden, wodurch die mindestens eine an diesen elektrischen Anschluss 250 angeschlossene OLED 20 betrieben wird. Bei einer höchsten Schwellentemperatur sind alle elektrischen Anschlüsse mit der Stromversorgung verbunden und dadurch alle an die elektrischen Anschlüsse 250 angeschlossenen OLEDs 20 des Leuchtmittels 100 betrieben.

Denkbar sind weitere Schwellentemperaturen, unter oder oberhalb denen beispielsweise Maßnahmen gegen Überhitzung und/oder eine gestufte Abschaltungen von weiterer oder weniger elektrischer Anschlüsse 250 stattfinden.

Wichtig ist hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler 210 und OLED 20 bzw. OLEDs 20 entstehen können. Generell gilt, dass Unter- und/oder Überschreitungen einer Schwellentemperatur je nach erwünschter Charakteristik die Schwellentemperatur einschließen können, so dass bereits bei Erreichen einer Schwellentemperatur im Sinne einer Gleichheit der erfassten Temperatur mit einer Schwellentemperatur eine Zu- und/oder Abschaltung vorgenommen wird, je nachdem von welcher Seite - höher oder niedriger - sich die erfasste Temperatur einer Schwellentemperatur annähert.

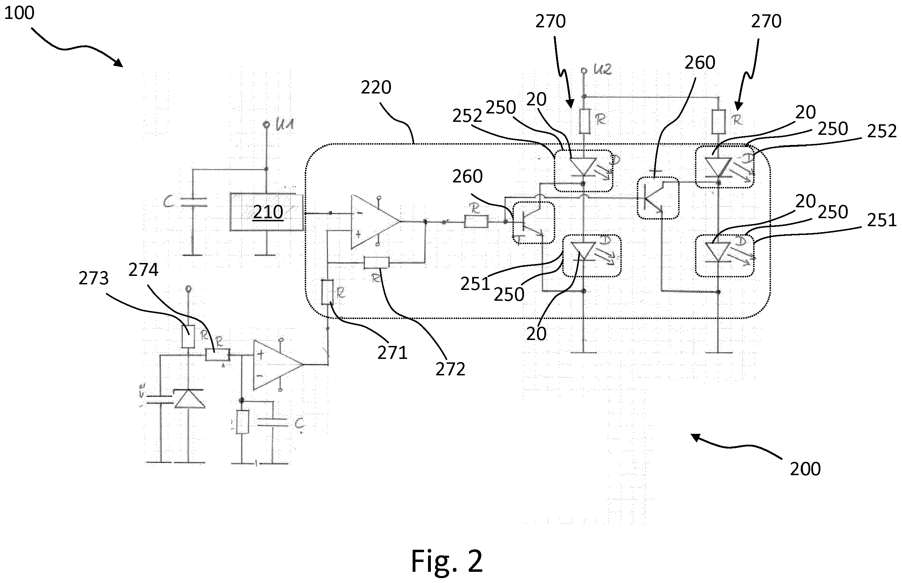

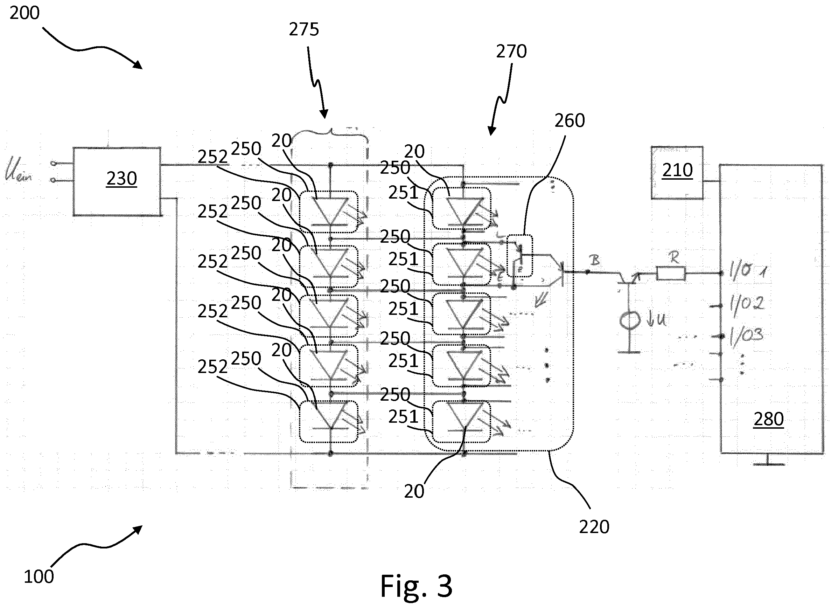

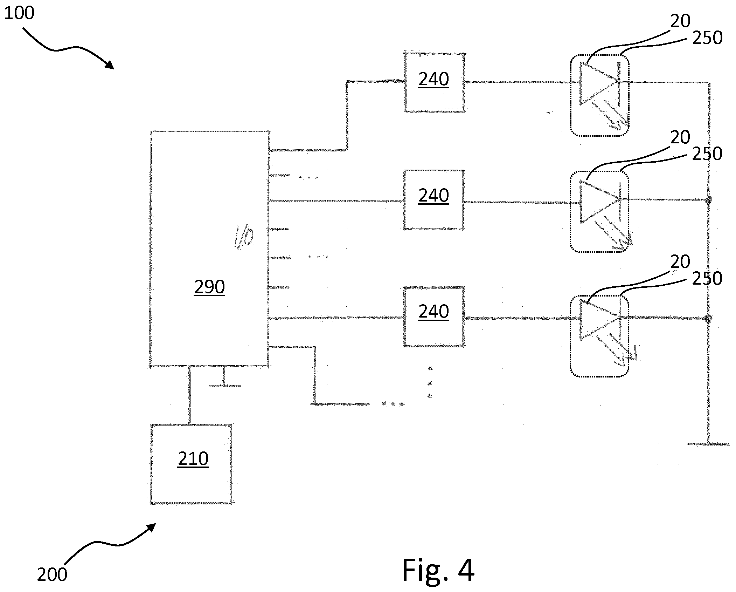

Elektrische Anschlüsse 250 des Leuchtmittels 100 können wie in Fig. 1 dargestellt in Serie geschaltet, oder wie in Fig. 4 dargestellt parallel zueinander angeordnet sein, oder sie können wie in Fig. 2 und in Fig. 3 dargestellt sowohl in Serie, als auch parallel geschaltet sein.

So sind beispielsweise in Fig. 1, Fig. 2 und Fig. 3 jeweils wenigstens zwei der elektrischen Anschlüsse 250 für jeweils mindestens eine OLED 20 in Serie zueinander angeordnet.

In Fig. 2 und Fig. 3 sind jeweils wenigstens zwei der elektrischen Anschlüsse 250 für jeweils mindestens eine OLED 20 außerdem parallel zueinander angeordnet.

Zumindest ein Temperaturfühler 210 kann unmittelbar auf einer OLED 20 angeordnet sein, beispielsweise auf einem vorder- oder rückseitigen Glas- oder Kunststoffplättchen einer als Lichtquelle des Leuchtmittels 100 vorgesehenen OLED 20.

Der Temperaturfühler 210 kann zumindest mit einer wenigstens einen Schalter 260 umfassenden Partie des Schaltkreises 220 verbunden sein. Der Schalter 260 wird bei einem einer von dem Temperaturfühler 210 erfassten Temperatur, die gleich oder kleiner ist, als eine vorgegebene Schwellentemperatur von beispielsweise 0°C proportionalen Ausgangssignal des Temperaturfühlers 210 derart geschaltet, dass bis auf wenigstens einen verbleibenden elektrischen Anschluss 252 des Leuchtmittels 100 mindestens ein elektrischer Anschluss 251 des Leuchtmittels 100, beispielsweise die Hälfte aller elektrischen Anschlüsse 250 des Leuchtmittels 100 nebst der an diesen angeschlossenen OLEDs 20, bei Betrieb des Leuchtmittels 100 von der Stromversorgung durch die Schaltungsanordnung 200 getrennt ist und dadurch die wenigstens eine an diesen mindestens einen elektrischen Anschluss 251 angeschlossene OLED 20 nicht betrieben wird.

Bei einem einer von dem Temperaturfühler 210 erfassten Temperatur, die gleich oder größer ist, als eine vorgegebene Schwellentemperatur von beispielsweise 0°C proportionalen Ausgangssignal wird der Schalter 260 von dem Temperaturfühler 210 derart geschaltet, dass alle elektrischen Anschlüsse 250 des Leuchtmittels und damit alle OLEDs 20 des Leuchtmittels 100 bei dessen Betrieb mit der Stromversorgung durch die Schaltungsanordnung 200 verbunden sind und dadurch betrieben werden.

Die Schaltungsanordnung und/oder der Schaltkreis 220 können ein oder mehrere Proportional- und/oder Differential- und/oder Integralglieder, so genannte P-, D-, I-Glieder und/oder Schalter 260 umfassen, um eine gewünschte Regelcharakteristik zu erhalten.

Fig. 2 zeigt ein zweites Ausführungsbeispiel einer Schaltungsanordnung 200 zur Stromversorgung der OLEDs 20 bei Betrieb des Leuchtmittels 100 mit einer analogen Stromregelung, die abhängig von der Temperatur in jedem Strang 270 unterhalb einer Schwellentemperatur jeweils eine OLED 20 überbrückt und oberhalb einer Schwellentemperatur nicht überbrückt. Vorteilhaft bei der analogen Ausführung sind die geringen EMV-Probleme, die aus diesem Schaltungsaufbau resultieren. Ohmsche Widerstände 271, 272 dienen der Einstellung einer Hysterese, um abhängig von der Richtung der Überschreitung einer Schwellentemperatur unterschiedliche Schwellentemperaturen festzulegen. Ohmsche Widerstände 281, 282 dienen der Einstellung von Schaltpunkten.

Ein in Fig. 3 dargestelltes, drittes Ausführungsbeispiel einer Schaltungsanordnung 200 zur Stromversorgung der OLEDs 20 bei Betrieb des Leuchtmittels 100 umfasst eine zentrale DC/DC-Wandlerschaltung 230 mit einem Mikrokontroller 280. Hierbei können die OLEDs 20 einzeln aus- und eingeschalten, sowie auch einzeln gedimmt werden. Um EMV-Problemen entgegenzuwirken reicht beispielsweise eine einfache Blechschirmung über dem DC/DC-Wandler. Auch eine zuvor beschriebene Abschirmung ist denkbar, um EMV sicherzustellen. Die einzeln zu- und abschaltbaren elektrische Anschlüsse 250 sind in mindestens einem Strang 270 in Serie geschaltet angeordnet. Ein paralleler Strang 275 von elektrischen Anschlüssen 250 ist optional.

Ein in Fig. 4 dargestelltes, viertes Ausführungsbeispiel einer Schaltungsanordnung 200 zur Stromversorgung der OLEDs 20 bei Betrieb des Leuchtmittels 100 zeigt eine Schaltung mit einem Mikrokontroller 290 bei der für jede OLED ein separater DC/DC-Wandler 240 eingesetzt wird. Hierbei ist der Vorteil, dass jeder elektrische Anschluss 250 und jede an einen elektrischen Anschluss 250 angeschlossene mindestens eine OLED 20 separat gesteuert und auch gedimmt werden kann. Ein Vorteil diesen vierten Ausführungsbeispiels im Vergleich zum in Fig. 3 dargestellten dritten Ausführungsbeispiel ist, dass die Ströme für jeden elektrischen Anschluss 250 und die daran angeschlossenen OLEDs 20 nicht gleich sein müssen. Dies ist vor allem dann vorteilhaft, wenn OLEDs 20 mit unterschiedlichen Geometrien zusammen in einem Leuchtmittel 100 eingesetzt werden. Unterschiedliche Geometrien von OLEDs 20 bedeuten i. d. R. dass die OLEDs 20 verschiedene Stromaufnahmen aufweisen. Um EMV-Problemen entgegenzuwirken genügt eine einfache Blechschirmung über den DC/DC-Wandlern 240.

OLEDs 20 werden, wie auch LEDs, stromgetrieben. Eine einfache Spannungserhöhung ohne aufwändige Spannungsumwandlung, wozu die im Kraftfahrzeug vorherrschende Gleichspannung in Wechselspannung und wieder zurück umgewandelt werden muss, ist nicht möglich, da der zur Verfügung stehende Spannungsbereich im Automobilbereich nicht ohne weiteres dafür ausreicht, mehrere in Serie geschaltete OLEDs 20 zu betreiben.

Mit Hilfe eines Leuchtmittels 100 mit einer Schaltungsanordnung 200, die auch einen oder mehrere Temperaturfühler 210 umfasst, können OLEDs 20 abhängig von der von mindestens einem Temperaturfühler 210 erfassten Temperatur im Stromkreis überbrückt werden, wobei ein elektrischer Anschluss 251 mit beispielsweise einer hieran angeschlossenen OLED 20 beispielsweise kurzgeschlossen wird. Somit wird in einer Serienschaltung von z. B. zwei OLEDs 20, durch das Überbrücken einer OLED 20, nur noch eine betrieben. Hierdurch erhöht sich der Spannungsabfall an der nicht überbrückten OLED 20 entsprechend.

Dies wird nötig, da bei tiefen Temperaturen von z. B. -40 °C OLEDs 20 eine signifikant höhere Spannungsaufnahme haben, als z. B. bei 0 °C.

Durch die Selbsterwärmung der OLED 20 im Betrieb wärmt sich beispielsweise der Leuchteninnenraum 04 einer Kraftfahrzeugleuchte 01 relativ schnell auf. Ab einem bestimmten, vorzugsweise höher gelegenen Schwellentemperatur sorgt der Temperaturfühler 210 in der Schaltungsanordnung 200 dafür, dass die noch überbrückte mindestens eine OLED 20 (wieder) in Betrieb genommen wird. Hierdurch lässt sich die Spannungsverschiebung, die aus der I-U-Kennlinie der OLED 20 hervorgeht, abmindern.

Das Leuchtmittel 100 kann zusätzlich einen Träger 10 umfassen, an dem mindestens eine OLED 20 des Leuchtmittels 100 angeordnet ist (Fig. 5).

Sich durch den Träger 10 ergebende Vorteile sind eine einwandfreie spannungsfreie Halterung von OLEDs 20 auf dem Träger 10, ohne deren Lichtabstrahlung zu behindern, einhergehend mit einer thermischen Ankopplung, um beim Betrieb der OLED 20 entstehende Wärme optimal abführen zu können.

Wenigstens ein zumindest in wärmeleitendem Kontakt mit zumindest einer OLED 20 stehender Temperaturfühler 210 kann auf und/oder in dem Träger 10 und/oder zwischen dem Träger 10 und mindestens einer OLED 20 und/oder auf einer mindestens einer OLED 20 abgewandten Seite des Trägers 10 angeordnet sein.

Der Träger 10 kann darüber hinaus elektrische Kontakte aufweisen. Mit den elektrischen Kontakten kann die mindestens eine vom Träger 10 gehaltene OLED 20 mit Strom beaufschlagt werden.

Solche elektrischen Kontakte können darüber hinaus der elektrischen Kontaktierung des Temperaturfühlers 210 und der Schaltung 220 der Schaltungsanordnung 200 dienen.

Beispielsweise kann der Träger 10 als im MID-Verfahren (MID; Molded Interconnect Device) spritzgegossener Schaltungsträger ausgeführt sein. Alternativ oder zusätzlich kann eine Platine am Träger 10 befestigt sein und mindestens eine OLED 10 des Leuchtmittels 100 mittels Kabelverbindung und/oder Flexplatine elektrisch kontaktiert sein.

Das Leuchtmittel 100 kann wie erwähnt in einer Kraftfahrzeugleuchte 01 beherbergt sein. Zur Beherbergung kann vorgesehen sein, dass mindestens eine OLED 20 des Leuchtmittels 100 in eine Lichtscheibe 03 und/oder eine Rückwand 06 und/oder in ein anderes Bauteil der Kraftfahrzeugleuchte 01 integriert ist.

Die Kraftfahrzeugleuchte 01 kann einen von einem Leuchtengehäuse 02 und wenigstens einer Lichtscheibe 03 zumindest zum Teil umschlossenen Leuchteninnenraum 04 aufweisen.

Die Lichtscheibe 03 der Kraftfahrzeugleuchte 01 kann tiefgezogen oder im Spritzgussverfahren hergestellt sein. Die Lichtscheibe 03 der Kraftfahrzeugleuchte 01 ist bevorzugt aus Kunststoff hergestellt.

Die Beherbergung des Leuchtmittels 100 und/oder zumindest einer OLED 20 des Leuchtmittels 100 kann in dem gegebenenfalls vorgesehenen Leuchteninnenraum 04 vorgesehen sein.

In dem Leuchteninnenraum 03 können eine oder mehrere Lichtquellen:
- des selben Leuchtmittels 100 beherbergt sein, wie eines zuvor beschriebenen Leuchtmittels 100, und/oder
- mindestens eines zur Erfüllung der selben Lichtfunktion vorgesehenen Leuchtmittels beherbergt sein, wie der von einem zuvor beschriebenen Leuchtmittel 100 erfüllten, und/oder
- mindestens eines weiteren Leuchtmittels beherbergt sein, als eines zuvor beschriebenen Leuchtmittels 100, und/oder
- mindestens eines zur Erfüllung einer anderen Lichtfunktion vorgesehenen Leuchtmittels beherbergt sein, als der von einem zuvor beschriebenen Leuchtmittel 100 erfüllten.

Der gegebenenfalls vorgesehene, von dem Leuchtengehäuse 02 und zumindest einer Lichtscheibe 03 zumindest zum Teil umschlossene Leuchteninnenraum 04 der Kraftfahrzeugleuchte 01 beherbergt vorzugsweise eine Blende 05.

Die Blende 05 teilt den Leuchteninnenraum 04 vorzugsweise in einen durch die Lichtscheibe 03 hindurch gesehen vor der Blende 05 liegenden und durch die Lichtscheibe 03 hindurch einsehbaren, ersten Bereich 41 und in einen durch die Lichtscheibe 03 hindurch gesehen hinter der Blende 05 liegenden und durch die Lichtscheibe 03 hindurch nicht einsehbaren, zweiten Bereich 42 ein.

Ein gegebenenfalls vorgesehener Träger 10 zumindest eines von der Kraftfahrzeugleuchte 01 beherbergten Leuchtmittels 100 kann vorzugsweise an einer durch die Blende 05 beispielsweise von einer Vorderseite 51 der Blende 05 zu einer Rückseite 52 der Blende 05 hindurchreichenden Partie 30 elektrische Kontakte, aufweisen. Mit den elektrischen Kontakten kann wenigstens die zumindest eine vom Träger 10 gehaltene OLED 20 des Leuchtmittels 100 mit Strom versorgt werden.

Sowohl das Leuchtmittel 100, als auch die mit mindestens einem solchen Leuchtmittel 100 ausgestattete Kraftfahrzeugleuchte 01 erlauben die Durchführung eines Verfahrens zum Betrieb mindestens eines Leuchtmittels 100 mit wenigstens zwei OLEDs 20 als Lichtquellen und/oder einer mit mindestens einem Leuchtmittel 100 mit wenigstens zwei OLEDs 20 als Lichtquellen ausgestatteten Kraftfahrzeugleuchte 01, welches Verfahren vorsieht, unterhalb mindestens einer vorgegebenen Schwellentemperatur bis auf zumindest eine verbleibende OLED 20 zumindest eines Leuchtmittels 100 mit mindestens zwei OLEDs 20 als Lichtquellen wenigstens eine OLED 20 beim Betrieb des Leuchtmittels 100 abzuschalten, bis die zumindest eine verbleibende, bei Betrieb des Leuchtmittels 100 betriebene OLED 20 wenigstens sich selbst sowie gegebenenfalls die wenigstens eine abgeschaltete OLED 20 auf eine Temperatur oberhalb einer vorgegebenen Schwellentemperatur erwärmt hat, ab und/oder oberhalb welcher Schwellentemperatur alle OLEDs 20 des Leuchtmittels 100 (wieder) betrieben werden oder zusätzlich zu welcher zumindest einen verbleibenden, bei Betrieb des Leuchtmittels 100 betriebenen OLED 20 zumindest mindestens eine unterhalb einer vorgegebenen Schwellentemperatur abgeschaltete OLED 20 (wieder) betrieben wird.

Wichtig ist hervorzuheben, dass eine Trennung mindestens eines elektrischen Anschlusses von der Stromversorgung im Sinne der Erfindung auch dann vorliegt, wenn weiterhin ein Leckstrom durch mindestens eine, an einem von der Stromversorgung getrennten elektrischen Anschluss angeschlossene OLED fließt, welcher jedoch nicht ausreicht, eine Lichtemission einer OLED zu erzeugen.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Leuchtengehäuse
- 03: Lichtscheibe
- 04: Leuchteninnenraum
- 05: Blende
- 06: Rückwand
- 10: Träger
- 20: OLED
- 30: durch die Blende 05 hindurchreichende Partie des Trägers
- 41: erster Bereich des Leuchteninnenraums 04, vor der Blende 05 liegend
- 42: zweiter Bereich des Leuchteninnenraums 04, hinter der Blende 05 liegend
- 51: Vorderseite der Blende 05
- 52: Rückseite der Blende 05
- 100: Leuchtmittel
- 200: Schaltungsanordnung
- 210: Temperaturfühler
- 220: Schaltkreis
- 230: DC/DC-Wandlerschaltung
- 240: DC/DC-Wandler
- 250: elektrischer Anschluss
- 251: elektrischer Anschluss
- 252: elektrischer Anschluss
- 260: Schalter
- 270: Strang
- 271: ohmscher Widerstand
- 272: ohmscher Widerstand
- 273: ohmscher Widerstand
- 274: ohmscher Widerstand
- 275: Strang
- 280: Mikrocontroller
- 290: Mikrocontroller

## Patentansprüche

1. Leuchtmittel (100) umfassend mindestens zwei OLEDs (20) als Lichtquellen, und eine Schaltungsanordnung (200) zur Stromversorgung der OLEDs (20) bei Betrieb des Leuchtmittels (100) mit:
- wenigstens zwei elektrischen Anschlüssen (250, 251, 252) für jeweils mindestens eine OLED (20),
- mindestens einem zumindest in wärmeleitendem Kontakt mit zumindest einer der OLEDs (20) stehenden Temperaturfühler (210), welcher ein einer von ihm erfassten Temperatur proportionales Ausgangssignal aufweist,
- einem mit dem Temperaturfühler (210) verbundenen und von dessen Ausgangssignal gesteuerten Schaltkreis (220), welcher die Stromzufuhr wenigstens einer der OLEDs (20) in Abhängigkeit von der vom Temperaturfühler (210) erfassten Temperatur steuert, **dadurch gekennzeichnet, dass**
das Ausgangssignal des Temperaturfühlers (210) den Schaltkreis (220) derart steuert, dass die Schaltungsanordnung (200) bei Betrieb des Leuchtmittels (100):
- bei einem Ausgangssignal proportional einer vom Temperaturfühler (210) erfassten Temperatur, die niedriger ist, als eine vorgegebene Schwellentemperatur, wenigstens einen elektrischen Anschluss (251) von der Stromversorgung trennt, wobei zumindest ein verbleibender elektrischer Anschluss (252) weiterhin mit der Stromversorgung verbunden ist, und
- bei einem Ausgangssignal proportional einer vom Temperaturfühler (210) erfassten Temperatur, die höher ist, als eine vorgegebene Schwellentemperatur, sämtliche elektrische Anschlüsse (250, 251, 252) mit der Stromversorgung verbindet.

2. Leuchtmittel nach Anspruch 1, wobei an wenigstens einen elektrischen Anschluss (250, 251, 252) mehrere OLEDs (20) parallel und/oder in Serie geschaltet angeschlossen sind.

3. Leuchtmittel nach Anspruch 1 oder 2, wobei wenigstens ein elektrischer Anschluss (250, 251) von der Stromversorgung getrennt wird, indem der wenigstens eine elektrische Anschluss (250, 251) überbrückt wird.

4. Leuchtmittel nach Anspruch 1, 2 oder 3, wobei mehrere Schwellentemperaturen in Anhängigkeit von der Anzahl der vorhandenen elektrischen Anschlüsse (250, 251, 252) des Leuchtmittels (100) vorgegeben sind, wobei bei einer niedrigsten Schwellentemperatur genau ein elektrischer Anschluss (252) mit der Stromversorgung verbunden ist und bei einer höchsten Schwellentemperatur alle elektrischen Anschlüsse (250, 251, 252) mit der Stromversorgung verbunden sind.

5. Leuchtmittel nach einem der Ansprüche 1 bis 4, wobei wenigstens zwei der elektrischen Anschlüsse (250) in Serie und/oder parallel zueinander angeordnet sind.

6. Leuchtmittel nach einem der voranstehenden Ansprüche, wobei zumindest ein Temperaturfühler (210) unmittelbar auf einer OLED (20) angeordnet ist.

7. Leuchtmittel nach einem der voranstehenden Ansprüche, wobei der Temperaturfühler (210) zumindest mit einer wenigstens einen Schalter (260) umfassenden Partie des Schaltkreises (220) verbunden ist, welcher bei einem einer von dem Temperaturfühler (210) erfassten Temperatur, die kleiner ist, als eine vorgegebene Schwellentemperatur proportionalen Ausgangssignal des Temperaturfühlers (210) derart geschaltet wird, dass bis auf wenigstens einen verbleibenden elektrischen Anschluss (252) des Leuchtmittels (100) mindestens ein elektrischer Anschluss (251) des Leuchtmittels (100) bei Betrieb des Leuchtmittels (100) von der Stromversorgung durch die Schaltungsanordnung (200) getrennt ist, und welcher bei einem einer von dem Temperaturfühler (210) erfassten Temperatur, die größer ist, als eine vorgegebene Schwellentemperatur proportionalen Ausgangssignal von dem Temperaturfühler (210) derart geschaltet wird, dass alle elektrischen Anschlüsse (250) des Leuchtmittels (100) bei dessen Betrieb mit der Stromversorgung durch die Schaltungsanordnung (200) verbunden sind.

8. Leuchtmittel nach einem der voranstehenden Ansprüche, wobei der Schaltkreis (220) ein oder mehrere Proportional- und/oder Differential- und/oder Integralglieder (P-, D-, I-Glieder) und/oder Schalter umfasst um eine gewünschte Regelcharakteristik zu erhalten.

9. Leuchtmittel nach einem der voranstehenden Ansprüche, wobei das Leuchtmittel (100) zusätzlich einen Träger (10) umfasst, an dem mindestens eine OLED (20) des Leuchtmittels (100) angeordnet ist.

10. Leuchtmittel nach Anspruch 9, wobei wenigstens ein zumindest in wärmeleitendem Kontakt mit zumindest einer OLED (20) stehender Temperaturfühler (210) auf und/oder in dem Träger (10) und/oder zwischen dem Träger (10) und mindestens einer OLED (20) und/oder auf einer mindestens einer OLED (20) abgewandten Seite des Trägers (10) angeordnet ist.

11. Kraftfahrzeugleuchte (01) mit wenigstens einem zur Erfüllung wenigstens einer Lichtfunktion der Kraftfahrzeugleuchte (01) vorgesehenen Leuchtmittel (100) mit wenigstens zwei OLEDs (20) als Lichtquellen, **gekennzeichnet durch** ein Leuchtmittel (100) nach einem der vorhergehenden Ansprüche.

12. Kraftfahrzeugleuchte nach Anspruch 11, wobei in einem von einem Leuchtengehäuse (02) und wenigstens einer Lichtscheibe (03) zumindest zum Teil umschlossenen Leuchteninnenraum (04) eine oder mehrere Lichtquellen:
- des selben Leuchtmittels (100) beherbergt sind, wie das Leuchtmittel (100), nach einem der Ansprüche 1 bis 10, und/oder
- mindestens eines zur Erfüllung der selben Lichtfunktion vorgesehenen Leuchtmittels beherbergt sind, wie der von dem Leuchtmittel (100) nach einem der Ansprüche 1 bis 10 erfüllten, und/oder
- mindestens eines weiteren Leuchtmittels beherbergt sind, als dem Leuchtmittel (100) nach einem der Ansprüche 1 bis 10, und/oder
- mindestens eines zur Erfüllung einer anderen Lichtfunktion vorgesehenen Leuchtmittels beherbergt sind, als der von dem Leuchtmittel (100) nach einem der Ansprüche 1 bis 10 erfüllten.

13. Kraftfahrzeugleuchte nach Anspruch 11 oder 12, wobei sie als Heckleuchte oder als in einem Außenrückblickspiegel untergebrachte Wiederholblinkleuchte ausgeführt ist.

14. Verfahren zum Betrieb mindestens eines Leuchtmittels (100) mit wenigstens zwei OLEDs (20) als Lichtquellen nach einem der Ansprüche 1 bis 10 und/oder einer Kraftfahrzeugleuchte (01) mit mindestens einem Leuchtmittel (100) mit wenigstens zwei OLEDs (20) als Lichtquellen nach einem der Ansprüche 11 bis 13, wobei unterhalb mindestens einer vorgegebenen Schwellentemperatur wenigstens eine OLED (20) zumindest eines Leuchtmittels (100) mit mindestens zwei OLEDs (20) als Lichtquellen beim Betrieb des Leuchtmittels (100) abgeschaltet wird, bis die zumindest eine verbleibende, bei Betrieb des Leuchtmittels (100) betriebene OLED (20) wenigstens sich selbst sowie gegebenenfalls die wenigstens eine abgeschaltete OLED (20) auf eine Temperatur oberhalb einer vorgegebenen Schwellentemperatur erwärmt hat, ab und/oder oberhalb welcher Schwellentemperatur alle OLEDs (20) des Leuchtmittels (100) (wieder) betrieben werden oder zusätzlich zu welcher zumindest einen verbleibenden, bei Betrieb des Leuchtmittels (100) betriebenen OLED (20) zumindest mindestens eine unterhalb einer vorgegebenen Schwellentemperatur abgeschaltete OLED (20) (wieder) betrieben wird.

## Claims

1. A lighting means (100) comprising at least two OLEDs (20) as light sources and a circuit configuration (200) for the power supply of the OLEDs (20) during operation of the lighting means (100), with:
- at least two electrical connections (250, 251, 252), for at least one OLED (20) each;
- at least one temperature sensor (210), which is at least in thermally conducting contact with at least one of the OLEDs (20) and which has an output signal that is proportional to a temperature detected by it;
- a circuit (220) connected to the temperature sensor (210) and controlled by the output signal of said temperature sensor (210), which circuit (220) controls the power feed of at least one of the OLEDs (20) based on the temperature detected by the temperature sensor (210);
**characterised in that** the output signal of the temperature sensor (210) controls the circuit (220) such that, during operation of the lighting means (100), the circuit configuration (200):
- disconnects at least one electrical connection (251) from the power supply in the instance of an output signal that is proportional to a temperature detected by the temperature sensor (210), which temperature is lower than a specified threshold temperature, wherein at least one remaining electrical connection (252) continues to be connected to the power supply, and
- connects all electrical connections (250, 251, 252) to the power supply in the instance of an output signal that is proportional to a temperature detected by the temperature sensor (210), which temperature is higher than a specified threshold temperature.

2. The lighting means as recited in claim 1 wherein a plurality of OLEDs (20) are connected to at least one electrical connection (250, 251, 252) in parallel and/or in series.

3. The lighting means as recited in claim 1 or 2 wherein at least one electrical connection (250, 251) is disconnected from the power supply by the at least one electrical connection (250, 251) being bypassed.

4. The lighting means as recited in claim 1, 2 or 3 wherein a plurality of threshold temperatures are specified based on the number of the present electrical connections (250, 251, 252) of the lighting means (100), wherein exactly one electrical connection (252) is connected to the power supply at a lowest threshold temperature and all electrical connections (250, 251, 252) are connected to the power supply at a highest threshold temperature.

5. The lighting means as recited in one of the claims 1 to 4 wherein at least two of the electrical connections (250) are arranged in series and/or parallel to each other.

6. The lighting means as recited in one of the previous claims wherein at least one temperature sensor (210) is arranged immediately on an OLED (20).

7. The lighting means as recited in one of the previous claims wherein the temperature sensor (210) is connected to at least one section of the circuit (220) comprising at least one switch (260), which is switched such that at least one electrical connection (251) of the lighting means (100), except for at least one remaining electrical connection (252) of the lighting means (100), is disconnected from the power supply by way of the circuit configuration (200) during operation of the lighting means (100) in the instance of an output signal of the temperature sensor (210) that is proportional to a temperature detected by the temperature sensor (210), which temperature is less than a specified threshold temperature; and which switch (260) is switched by the temperature sensor (210) such that all electrical connections (250) of the lighting means (100) are connected to the power supply by way of the circuit configuration (200) during operation of the lighting means (100) in the instance of an output signal that is proportional to a temperature detected by the temperature sensor (210), which temperature is greater than a specified threshold temperature.

8. The lighting means as recited in one of the previous claims wherein the circuit (220) comprises one or more proportional, derivative and/or integral elements (P, D, I elements) and/or switches in order to obtain desired control characteristics.

9. The lighting means as recited in one of the previous claims wherein the lighting means (100) additionally comprises a carrier (10), at which at least one OLED (20) of the lighting means (100) is arranged.

10. The lighting means as recited in claim 9 wherein at least one temperature sensor (210), which is at least in thermally conducting contact with at least one OLED (20), is arranged on and/or in the carrier (10) and/or between the carrier (10) and at least one OLED (20) and/or on a side of the carrier (10) that is averted from at least one OLED (20).

11. A motor vehicle lamp (01) with at least one lighting means (100) provided for fulfilling at least one light function of the motor vehicle lamp (01) with at least two OLEDs (20) as light sources, **characterised by** a lighting means (100) as recited in one of the preceding claims.

12. The motor vehicle lamp as recited in claim 11 wherein, accommodated in a lamp interior (04) that is at least partly enclosed by a lamp housing (02) and by at least one light lens (03), are one or more light sources:
- of the same lighting means (100) as the lighting means (100) as recited in one of the claims 1 to 10, and/or
- of at least one lighting means provided for fulfilling the same light function as that fulfilled by the lighting means (100) as recited in one of the claims 1 to 10, and/or
- of at least one lighting means in addition to the lighting means (100) as recited in one of the claims 1 to 10, and/or
- of at least one lighting means provided for fulfilling a different light function than that fulfilled by the lighting means (100) as recited in one of the claims 1 to 10.

13. The motor vehicle lamp as recited in claim 11 or 12 wherein the motor vehicle lamp is designed to be a taillight or a flashing indicator lamp accommodated in an external rearview mirror.

14. A method for operating at least one lighting means (100) as recited in one of the claims 1 to 10 with at least two OLEDs (20) as light sources and/or for operating a motor vehicle lamp (01) as recited in one of the claims 11 to 13 with at least one lighting means (100) with at least two OLEDs (20) as light sources, wherein at least one OLED (20) of at least one lighting means (100) with at least two OLEDs (20) as light sources is switched off during operation of the lighting means (100) below at least one specified threshold temperature, until the at least one remaining OLED (20), which is operated during operation of the lighting means (100), has warmed up itself as well as, as the case may be, the at least one OLED (20), which has been switched off, to a temperature above a specified threshold temperature, from and/or above which threshold temperature all OLEDs (20) of the lighting means (100) are operated (again); or at least one OLED (20), which had been switched off below a specified threshold temperature, is at least operated (again) in addition to the at least one remaining OLED (20), which is operated during operation of the lighting means (100).

## Revendications

1. Moyen lumineux (100) comprenant au moins deux DELOs (20) en tant que sources lumineuses et un agencement de circuit (200) pour alimenter en courant les DELOs (20) lors du fonctionnement du moyen lumineux (100), comprenant:
- au moins deux bornes électriques (250, 251, 252) pour respectivement au moins une DELO (20),
- au moins un capteur de température (210) qui, au moins, est en contact thermoconducteur avec au moins l'une des DELOs (20) et qui présente un signal de sortie proportionnel à une température détectée par lui,
- un circuit (220) qui est relié au capteur de température (210) et est commandé par le signal de sortie de celui-ci et qui commande l'alimentation en courant d'au moins l'une des DELOs (20) en fonction de la température détectée par le capteur de température (210),
**caractérisé par le fait que** le signal de sortie du capteur de température (210) commande le circuit (220) de telle sorte que, lors du fonctionnement du moyen lumineux (100), l'agencement de circuit (200):
- déconnecte au moins une borne (251) de l'alimentation électrique dans le cas d'un signal de sortie proportionnel à une température détectée par le capteur de température (210), qui est inférieure à une température de seuil prédéterminée, dans lequel au moins une borne électrique (252) restante reste connectée à l'alimentation électrique, et
- connecte l'ensemble des bornes électriques (250, 251, 252) à l'alimentation électrique dans le cas d'un signal de sortie proportionnel à une température détectée par le capteur de température (210), qui est supérieure à une température de seuil prédéterminée.

2. Moyen lumineux selon la revendication 1, dans lequel à au moins une borne électrique (250, 251, 252) sont connectés plusieurs DELOs (20) en étant montées en parallèle et/ou en série.

3. Moyen lumineux selon la revendication 1 ou 2, dans lequel au moins une borne électrique (250, 251) est déconnectée de l'alimentation électrique en pontant ladite au moins une borne électrique (250, 251).

4. Moyen lumineux selon la revendication 1, 2 ou 3, dans lequel plusieurs températures de seuil sont prédéterminées en fonction du nombre des bornes électriques (250, 251, 252) existantes du moyen lumineux (100), dans lequel, dans le cas d'une température de seuil la plus basse, exactement une borne électrique (252) est reliée à l'alimentation électrique et, dans le cas d'une température de seuil la plus haute, l'ensemble des bornes électriques (250, 251, 252) est relié à l'alimentation électrique.

5. Moyen lumineux selon l'une quelconque des revendications 1 à 4, dans lequel au moins deux des bornes électriques (250) sont disposées en série et/ou en parallèle entre elles.

6. Moyen lumineux selon l'une quelconque des revendications précédentes, dans lequel au moins un capteur de température (210) est disposé directement sur une DELO (20).

7. Moyen lumineux selon l'une quelconque des revendications précédentes, dans lequel le capteur de température (210) est relié au moins à une partie du circuit (220), qui comprend au moins un interrupteur (260) lequel, dans le cas d'un signal de sortie du capteur de température (210) proportionnel à une température détectée par le capteur de température (210) qui est inférieure à une température de seuil prédéterminée, est commuté de telle sorte que, à l'exception d'au moins une borne électrique (252) restante du moyen lumineux (100), au moins une borne électrique (251) du moyen lumineux (100) est déconnectée, lors du fonctionnement du moyen lumineux (100), de l'alimentation électrique par l'agencement de circuit (200), et lequel, dans le cas d'un signal de sortie du capteur de température (210) proportionnel à une température détectée par le capteur de température (210) qui est supérieure à une température de seuil prédéterminée, est commuté de telle sorte que toutes les bornes électriques (250) du moyen lumineux (100) sont reliées, lors de son fonctionnement, à l'alimentation électrique par ledit agencement de circuit (200).

8. Moyen lumineux selon l'une quelconque des revendications précédentes, dans lequel le circuit (220) comprend un ou plusieurs éléments proportionnels et/ou différentiels et/ou intégraux (éléments P, D, I) et/ou interrupteurs afin d'obtenir une caractéristique de réglage souhaitée.

9. Moyen lumineux selon l'une quelconque des revendications précédentes, dans lequel le moyen lumineux (100) comprend en sus un support (10) sur lequel est disposée au moins une DELO (20) du moyen lumineux (100).

10. Moyen lumineux selon la revendication 9, dans lequel au moins un capteur de température (210) qui, au moins, est en contact thermoconducteur avec au moins une DELO (20) est disposé sur et/ou dans ledit support (10) et/ou entre le support (10) et au moins une DELO (20) et/ou sur un côté du support (10), qui montre dans la direction opposée à au moins une DELO (20).

11. Lampe de véhicule automobile (01) comprenant au moins un moyen lumineux (100) qui est prévu pour remplir au moins une fonction de lumière de la lampe de véhicule automobile (01) et comprend au moins deux DELOs (20) en tant que sources lumineuses, **caractérisée par** un moyen lumineux (100) selon l'une quelconque des revendications précédentes.

12. Lampe de véhicule automobile selon la revendication 11, dans laquelle, dans un volume intérieur de lampe (04) entouré au moins en partie d'un boîtier de lampe (02) et d'au moins une glace (03), est/sont logée(s) une ou plusieurs sources lumineuses:
- du même moyen lumineux (100), tel que le moyen lumineux (100) selon l'une quelconque des revendications 1 à 10, et/ou
- d'au moins un moyen lumineux prévu pour remplir la même fonction de lumière, telle que celle remplie par le moyen lumineux (100) selon l'une quelconque des revendications 1 à 10, et/ou
- d'au moins un moyen lumineux autre que le moyen lumineux (100) selon l'une quelconque des revendications 1 à 10, et/ou
- d'au moins un moyen lumineux prévu pour remplir une fonction de lumière autre que celle remplie par le moyen lumineux (100) selon l'une quelconque des revendications 1 à 10.

13. Lampe de véhicule automobile selon la revendication 11 ou 12, celle-ci étant réalisée en tant que feu arrière ou en tant que feu clignotant répétiteur logé dans un rétroviseur extérieur.

14. Procédé pour faire fonctionner au moins un moyen lumineux (100) comprenant au moins deux DELOs (20) en tant que sources lumineuses selon l'une quelconque des revendications 1 à 10 et/ou une lampe de véhicule automobile (01) ayant au moins un moyen lumineux (100) comprenant au moins deux DELOs (20) en tant que sources lumineuses selon l'une quelconque des revendications 11 à 13, dans lequel, au-dessous d'au moins une température de seuil prédéterminée, au moins une DELO (20) d'au moins un moyen lumineux (100) comprenant au moins deux DELOs (20) en tant que sources lumineuses est éteinte lors du fonctionnement du moyen lumineux (100) jusqu'à ce que ladite au moins une DELO (20) restante allumée lors du fonctionnement du moyen lumineux (100) ainsi que, le cas échéant, ladite au moins une DELO (20) éteinte s'est chauffée à une température supérieure à une température de seuil prédéterminée; à partir et/ou au-dessus de ladite température de seuil, toutes les DELOs (20) du moyen lumineux (100) sont (à nouveau) allumées, ou pour le moins au moins une DELO (20) éteinte au-dessous d'une température de seuil prédéterminée est (à nouveau) allumée en plus de ladite au moins une DELO (20) restante allumée lors du fonctionnement du moyen lumineux (100).
